Europäisches Patentamt

**European Patent Office**

**Office européen des brevets**

(11) Publication number: **0 271 330 B1**

## EUROPEAN PATENT SPECIFICATION

(45) Date of publication of patent specification: **06.05.92**  (51) Int. Cl.⁵: **B01D 19/00**

(21) Application number: **87310822.9**

(22) Date of filing: **09.12.87**

(54) **Apparatus for degassing a liquid.**

(30) Priority: **12.12.86 JP 190485/86 U**

(43) Date of publication of application:
**15.06.88 Bulletin 88/24**

(45) Publication of the grant of the patent:
**06.05.92 Bulletin 92/19**

(84) Designated Contracting States:
**AT BE CH DE ES FR GB GR IT LI LU NL SE**

(56) References cited:
**WO-A-82/01475**
**DE-A- 2 658 285**
**DE-A- 3 215 003**
**FR-A- 781 935**
**GB-A- 576 598**

**PATENT ABSTRACTS OF JAPAN, vol. 5, no.
35 (C-46)[707], 5th March 1981; JP-A-55 162
304 (ASAHI KASEI KOGYO K.K.) 17-12-1980**

(73) Proprietor: **JAPAN GORE-TEX, INC.**
**42-5, 1-chome Akazutsumi**
**Setagaya-ku Tokyo 156(JP)**

(72) Inventor: **Shibata, Yoshihiko**
**83-11 Matsushin-cho,**
**Okayama-shi,(JP)**

(74) Representative: **McCallum, William Potter et al
Cruikshank & Fairweather 19 Royal Ex-
change Square
Glasgow G1 3AE Scotland(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.18/2.0)

## Description

The present invention relates to liquid degassing apparatus, and seeks to provide a mechanism which makes it possible to efficiently remove gaseous components contained in various types of liquids.

In cases where the admixture of air and other gases with ultra-pure water and various other types of liquids is undesirable, degassing is necessary. Various degassing mechanisms have been devised for this purpose. For example, (A) mechanisms in which the liquid that is to be treated is introduced to one side of a porous tube or porous film, and degassing is accomplished from the other side of the porous tube or porous film, and (B) mechanisms in which degassing is accomplished by causing ultrasonic waves to act on the liquid that is to be treated, are known.

In mechanisms of the above-mentioned type (A), the area of contact between the liquid and the porous body must be increased in order to increase the degassing efficiency. For this purpose, means such as reduction of tube diameter or lengthening of tubes, or folding of films into pleats, have been adopted. In all of these cases, however, the amount of gas permeation through the porous body itself is much greater than the amount of gas permeation required for degassing, so that the efficiency is greatly influenced by the velocity at which the gas travels (diffuses) from the interior of the liquid to the point of contact with the porous body. In other words, the large amount of air permeation through the porous body itself is not utilized to full advantage.

Patent specification GB-A-576598 discloses an apparatus for aerating or de-aerating liquids such as fruit juices by projecting a jet of liquid upwardly against a flat plate so as to form a thin film of liquid, which passes over a perforated tubular member where gas absorption or removal occurs. The apparatus comprises a nozzle directed upwards towards the flat plate. The nozzle projects a jet of liquid and does not atomise the liquid.

German patent specifications DE-A-3215003 and DE-A-2658285 disclose apparatus for de-aerating liquid dialysate, such as blood, in a dialysis apparatus employing porous hydrophobic tubes.

Furthermore, in mechanisms which accelerate the movement of gases by causing ultrasonic waves to act on the liquid, it is necessary to introduce a substitute gas after degassing in order to prevent reinvation by gases in the air. Depending on the intended use, this exchange of gases may be effective in the removal of undesirable gases. However, such an exchange of gases is insufficient in almost all cases.

Furthermore, it is also possible to degas a sprayed liquid directly without using porous tubes. In such a case, however, only a water-sealed pump can be used, since the water droplets penetrate into the vacuum pump. The maximum vacuum pressure of such a pump is approximately 200 Torr (26.7 kPa), which is extremely low compared to the vacuum pressure of an oil-sealed pump. As a result, the degassing efficiency of such a mechanism is unavoidably poor.

The present invention provides apparatus for degassing a liquid containing a gas comprising a vacuum chamber; inlet supply means to said vacuum chamber for feeding liquid to be degassed into said vacuum chamber; outlet discharge means from said vacuum chamber through which degassed liquid can be discharged; and at least one porous hydrophobic tube of porous expanded polytetrafluoroethylene (PTFE) extending from said inlet supply means through said vacuum chamber to said outlet discharge means; each said porous hydrophobic tube having, near its inlet end, means for atomizing said liquid to be degassed as it enters said tube; whereby, as liquid containing gas enters said porous hydrophobic tube and is atomized by said means for atomizing said liquid, said gas passes through said porous tube into and out of said vacuum chamber and the remaining degassed liquid exits said porous tube through said outlet discharge means.

The apparatus preferably has a plurality of porous, hydrophobic tubes. The porous, hydrophobic tube preferably has a bend located near the discharge end of the tube.

The invention is illustrated by way of example, in the accompanying drawings in which:-

Figure 1 is an exploded pictorial view of degassing apparatus according to the invention;

Figure 2 is a top plan view of the apparatus of Figure 1; and

Figure 3 is a cross-sectional view of the apparatus of Figure 1 taken along line 3-3 of Figure 2.

Liquid degassing apparatus is provided wherein one or more porous, hydrophobic tubes are installed inside a vacuum chamber, each such tube having atomizing means located near its inlet end. As liquid to be degassed enters the tube, it is atomized and gas in the liquid passes out of the atomized liquid, through the porous tube and exits the vacuum chamber. The remaining degassed liquid exits the porous, hydrophobic tube through discharge means located at the downstream end of the porous tube and exits the chamber.

Specifically, the present invention consists of degassing apparatus which is characterised by (a) at least one porous tube installed inside a degassing chamber which is designed so that the pressure in the chamber can be reduced, and (b) a spray nozzle which sprays the liquid that is to be treated being installed inside the porous tube.

The liquid that is to be treated, which has been atomized by the aforesaid spray nozzle, is fed into the interior of the porous tube installed in the degassing chamber.

The surface area of a liquid which has been atomized as described above is at least several hundred times greater than that of a liquid which simply flows downwardly. Accordingly, the high gas permeability of the porous tube is advantageously utilized, and the removal of gases from the sprayed and atomized liquid is effectively achieved. The gases removed from the sprayed liquid are discharged into the degassing chamber, which is at a reduced pressure. Meanwhile, the liquid droplets move downward through the interior of the porous tube, and are conducted into a liquid reservoir, from which they are discharged in liquid form once again.

The lower portion of the aforementioned tube is preferably bent before it again connects with the liquid reservoir chamber. As a result, the atomized liquid is returned to a coalesced liquid state. Even in the case of a short thick tube, the liquid enters the liquid reservoir chamber in a liquid state without any substantial incorporation of gases from the air.

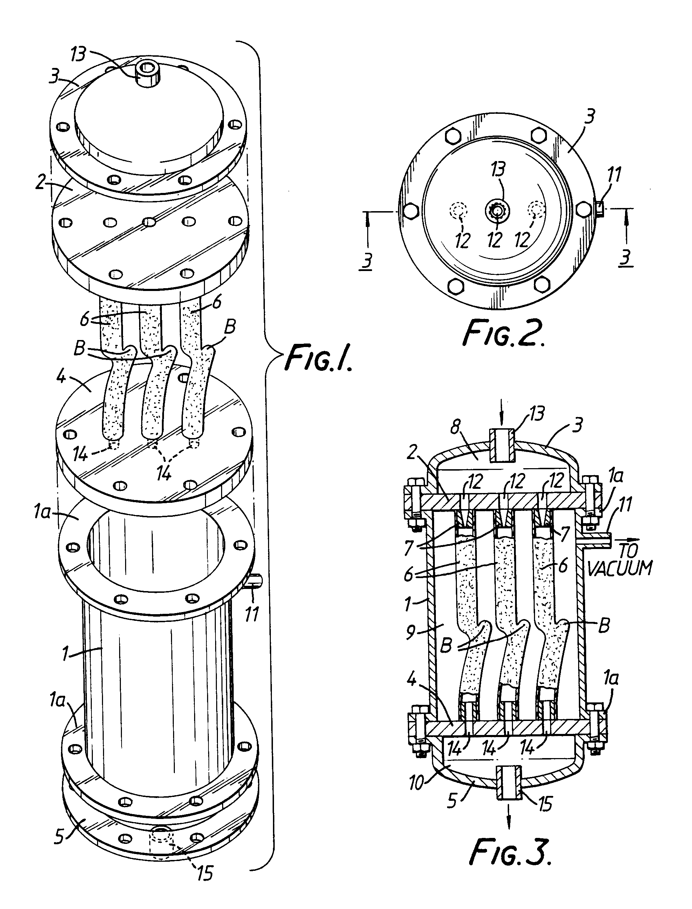

In the example of the invention shown in Figures 1 and 3, an upper cap 3 is attached (via a nozzle attachment header 2) to a cylindrical chamber 1 by an upper flange 1a. Chamber 1 has a degassing port 11 formed on one side near the top of the chamber. Furthermore, a lower cap 5 is attached to the bottom of the cylindrical chamber 1 via a lower header 4 by a lower flange 1a. A liquid inlet port 13 is formed in the upper cap 3, and a liquid discharge port 15 is formed in the lower cap 5. At least one porous tube 6 formed from a porous material such as porous polytetrafluoroethylene is connected between a liquid inlet port 12 formed in the central portion of the nozzle attachment header 2 and a discharge port 14 formed in the central portion of the lower header 4. A spray nozzle 7 is attached to the liquid inlet port 12, and a vacuum pump (not shown) is connected to the degassing port 11 so that the pressure inside the cylindrical chamber 1 can be reduced.

Sealing parts such as O-rings are appropriately interposed between the flange portions 1a of the cylindrical chamber 1 and the respective headers 2 and 4, and between these headers 2 and 4 and the respective caps 3 and 5, so that airtightness is maintained between the respective parts. Thus, a degassing region 9 whose pressure can be effectively reduced is formed inside the cylindrical chamber 1. Stable and secure connections can be obtained by using heat-shrink tubing in the areas of connection of the tube 6 to the liquid supply chamber 8 and liquid reservoir chamber 10.

The liquid supply chamber 8, into which the liquid to be treated is supplied from the liquid inlet port 13, is formed between the upper cap 3 and the nozzle attachment header 2. The liquid reservoir chamber 10 is formed between the lower cap 5 and lower header 4. As is shown in the figures, the porous tube 6 is installed so that it is appropriately bent, indicated at B in Figure 3, inside the degassing region 9 in the cylindrical chamber 1.

The surface area of the liquid to be treated, which is atomized by the spray nozzle 7, is increased by at least several hundred times compared to a case in which the liquid simply flows downward through the tube 6.

Generally, this increase is a thousand-fold or greater. Furthermore, the liquid, whose surface area has thus been increased by atomization, does not fill or block the interior surface of the porous tube 6. Accordingly, the removal of contained gases from the atomized droplets is effectively achieved by diffusion outwardly therefrom, and the gas components thus removed are securely discharged into the degassing chamber 9 outside the porous tube 6 through the pores of the porous tube 6.

If necessary, two or more porous tubes 6 of the type described above may be installed between the respective caps 3 and 5. Three are shown in the drawings. In such a case, a spray nozzle 7 such as that described above is installed in each of these porous tubes 6.

For completeness, Figure 2 is a top plan view of the apparatus showing cap 3, inlet port 13, gas discharge port 11 and liquid inlet ports 12.

The following is a description of an example of the present invention, wherein four tubes were employed.

The following type of tube was used for the above mentioned porous tubes 6: internal diameter, 12.5 mm; external diameter, 14.0 mm; porosity, 50% maximum pore diameter, 0.7 mm; gas permeation rate, 300 cc/cm$^2$.min. (at 1 kg/cm$^2$); length, 200 mm. A substantially conical nozzle was used as the spray nozzle 7 inside each porous tube 6, and tap water was sprayed into the chamber at a rate of 20 cc/min. Treatment was performed with the pressure outside the tubes 6 reduced to 20 Torr by means of a vacuum pump. The amount of solute oxygen in the water obtained from the liquid discharge port 15 was 0.1 ppm.

Such a result represents the same amount of treatment as that obtained using a conventional commerically marketed tube-type degassing apparatus employing a tube with an internal diameter of 15 mm and a length of 11.0 mm, and thus represents an increase of 730% in the efficiency per unit area of the tube. It is thus seen that a substantial increase in efficiency is achieved.

In the present invention, constructed as described above, degassing is performed by spraying the liquid that is to be degassed into at least one porous tube, and reducing the pressure outside the porous tube. As a result, extremely high-efficiency degassing can be achieved. Accordingly, degassing treatments required for high precision in the electronics industry and elsewhere can be performed inexpensively and by means of a compact device.

## Claims

1. Apparatus for degassing a liquid containing a gas comprising a vacuum chamber (1); inlet supply means (13) to said vacuum chamber for feeding liquid to be degassed into said vacuum chamber; outlet discharge means (15) from said vacuum chamber through which degassed liquid can be discharged; and at least one porous hydrophobic tube (6) of porous expanded polytetrafluoroethylene (PTFE) extending from said inlet supply means through said vacuum chamber to said outlet discharge means; each said porous hydrophobic tube having, near its inlet end, means (7) for atomizing said liquid to be degassed as it enters said tube; whereby, as liquid containing gas enters said porous hydrophobic tube and is atomized by said means for atomizing said liquid, said gas passes through said porous tube into and out of said vacuum chamber and the remaining degassed liquid exits said porous tube through said outlet discharge means.

2. Apparatus according to claim 1 having a plurality of said porous hydrophobic tubes (6).

3. Apparatus according to any preceding claim wherein the or each said porous hydrophobic tube (6) has a bend (B) located near the discharge end of said tube.

## Revendications

1. Appareil destiné à dégazer un liquide contenant un gaz comprenant une chambre de vide (1) ; des moyens (13) d'alimentation en entrée de ladite chambre de vide pour amener dans ladite chambre de vide un liquide à dégazer ; des moyens (15) d'évacuation en sortie de ladite chambre de vide à travers lesquels peut être déchargé le liquide dégazé ; et au moins un tube poreux hydrophobe (6) en polytétrafluoroéthylène (PTFE) expansé poreux, s'étendant depuis lesdits moyens d'alimentation en entrée à travers ladite chambre de vide vers lesdits moyens d'évacuation en sortie ; chacun desdits tubes poreux hydrophobes comportant, près de son extrémité d'entrée, des moyens (7) pour atomiser ledit liquide à dégazer lorsqu'il entre dans ledit tube ; grâce à quoi, lorsqu'un liquide contenant un gaz entre dans ledit tube poreux hydrophobe et est atomisé par lesdits moyens d'atomisation dudit liquide, ledit gaz traverse ledit tube poreux vers la chambre de vide et hors de celle-ci et le liquide dégazé restant sort par ledit tube poreux à travers lesdits moyens d'évacuation en sortie.

2. Appareil selon la revendication 1 comportant plusieurs desdits tubes poreux hydrophobes (6).

3. Appareil selon une revendication précédente quelconque dans lequel ledit tube poreux hydrophobe (6), ou chacun d'eux, comprend un coude (B) situé près de l'extrémité de décharge dudit tube.

## Patentansprüche

1. Vorrichtung zum Entgasen einer ein Gas enthaltenden Flüssigkeit, umfassend:
eine Vakuumkammer (1); eine zu der Vakuumkammer führende Einlaßanordnung (13) zum Einleiten von zu entgasender Flüssigkeit in die Vakuumkammer; eine von der Vakuumkammer wegführende Auslaßanordnung (15), durch die entgaste Flüssigkeit austragbar ist; und mindestens ein poröses hydrophobes Rohr aus porösem, expandiertem Polytetrafluorethylen (PTFE), welches sich von der Einlaßanordnung durch die Vakuumkammer hindurch zu der Auslaßanordnung erstreckt; wobei das poröse hydrophobe Rohr in der Nähe seines Einlaßendes Mittel (7) zum Atomisieren der zu entgasenden Flüssigkeit bei deren Eintritt in das Rohr aufweist; wodurch, wenn gashaltige Flüssigkeit in das poröse hydrophobe Rohr eintritt und von den Mitteln zum Atomisieren der Flüssigkeit atomisiert wird, das Gas durch das poröse Rohr hindurch in die Vakuumkammer hinein und aus dieser heraus gelangt, während die verbleibende entgaste Flüssigkeit das poröse Rohr durch die Auslaßanordnung verläßt.

2. Vorrichtung nach Anspruch 1, umfassend mehrere poröse hydrophobe Rohre (6).

3. Vorrichtung nach einem der vorhergehenden Ansprüche, bei der das poröse hydrophobe Rohr (6) oder jedes der Rohre in der Nähe des Auslaßendes des Rohrs eine Biegung (B) besitzt.

FIG.1.

FIG.2.

FIG.3.